# FASCICULE DE BREVET EUROPEEN

(11) **EP 1 752 350 B1**
(45) Date de publication et mention de la délivrance du brevet: **03.03.2010**
(21) Numéro de dépôt: 06015632.0
(22) Date de dépôt: 27.07.2006
(51) Int. Cl.: B60T 13/74, B60T 13/02, B60T 7/10, B60T 7/04, B60T 11/04, B60T 11/06

(54) **Frein de stationnement automatique à commande par câbles**
Automatische Kabelfeststellbremse
Automatic cable parking brake

(30) Priorité: 09.08.2005 FR 0508467
(43) Date de publication de la demande: 14.02.2007
(73) Titulaire: ROBERT BOSCH GMBH, 70442 Stuttgart (DE)
(72) Inventeur: Bourlon, Philippe, 77230 Dammartin En Goele (FR); Lefebvre, Cédric, 93000-Bobigny (FR); Sfriso, Thierry, 93600 Aulnay Sous Bois (FR)
(74) Mandataire: Hurwic, Aleksander Wiktor

(56) Documents cités:
- EP-A- 1 211 149
- WO-A-2004/089715
- FR-A- 2 726 525
- US-A1- 2004 055 832
- US-B2- 6 648 107

## Description

L'invention concerne un frein de stationnement pour véhicule automobile et plus particulièrement un frein de stationnement agissant sur les roues arrière du véhicule et appelé communément frein de parking automatique APB (automatic Parking Brake).

### ETAT DE LA TECHNIQUE

Il est connu dans la technique, pour la commande des freins de parking automatique, d'utiliser un câble primaire venant de l'avant du véhicule et de commander les dispositifs de freinage des roues arrières à l'aide de câbles secondaires. Un répartiteur de freinage réparti la sollicitation de freinage fournie par le câble primaire vers les câbles secondaires et donc vers les roues arrière de droite et de gauche du véhicule.

Dans le cas d'un frein de parking automatique, la force freinage communiquée au câble primaire est fournie par un moteur électrique qui exerce une force de traction sur le câble primaire.

De tel système nécessitent donc:
- un actuateur (moteur de commande) pour générer la force de freinage,
- un câble de transmission primaire pour transmettre cette force,
- un répartiteur et son boîtier de répartition pour la répartir vers les roues de droite et de gauche du véhicule,
- et des câbles secondaires transmettant les forces de freinage aux dispositifs de freinage de roues.

On connaît également des systèmes, tel que celui décrit dans la demande de brevet FR 2 726 525 ou dans WO 2004/089715 A ne possédant pas de câble primaire. Dans ces systèmes, les forces de freinages sont communiquées directement, par un moteur électrique, aux dispositifs de freinage des roues, mais ces systèmes nécessitent un réglage de la répartition des forces de freinage vers les roues de droite et de gauche du véhicule.

L'objet de l'invention est de simplifier l'ensemble du système de freinage. Son objet est également de fournir un système plus compact ne nécessitant pas de câble primaire et nécessitant moins de pièces.

De plus l'invention présente l'avantage de fournir un système dans lequel l'équilibrage des forces de freinage sur les roues de droite et de gauche se fait automatiquement. Le système de l'invention ne nécessite donc pas de réglage prévu à cet effet.

### RESUME DE L'INVENTION

1. L'invention concerne donc un frein de stationnement de véhicule automobile comprenant au moins un premier et un deuxième câble destinés à transmettre des efforts de freinage respectivement à un premier et un deuxième dispositif de freinage de roue du véhicule. Les premier et deuxième câbles sont situés respectivement dans une première et une deuxième gaine possédant chacune une première extrémité et une deuxième extrémité. La première extrémité de chaque gaine prend appui sur un desdits dispositifs de freinage. Le système de l'invention comporte en outre également un étrier d'appui possédant une première et une deuxième pièce d'extrémité d'appui. La deuxième extrémité de la première gaine prend appui sur la première pièce d'extrémité d'appui de l'étrier et la deuxième extrémité de la deuxième gaine prend appui sur la deuxième pièce d'extrémité d'appui. Un dispositif de traction est situé entre la première et la deuxième pièce d'extrémité d'appui et permet d'exercer un effort de traction sur ledit deuxième câble. Le premier câble a son extrémité fixée au dispositif de traction et est immobilisée sur ce dispositif.

Dans une forme de réalisation préférée de l'invention, le dispositif de traction est fixé au châssis du véhicule.

Ledit étrier d'appui est alors guidé selon un axe joignant les deux pièces d'appui d'extrémité.

Avantageusement, le dispositif de traction possède une pièce de fixation qui est fixée au véhicule et qui possède un dispositif de guidage pour guider le déplacement dudit étrier.

Selon une autre forme de réalisation possible de l'invention, l'étrier est fixé au châssis du véhicule et le dispositif de traction est mobile entre les deux pièces d'appui d'extrémité.

On prévoira avantageusement que le dispositif de traction comporte un moteur électrique permettant de tirer sur ledit deuxième câble.

Selon une forme de réalisation avantageuse, l'étrier d'appui et le dispositif de traction sont situés sensiblement entre les deux dispositifs de freinage.

Par exemple, l'étrier et le dispositif de traction sont situés dans une zone localisée sur le train arrière du véhicule.

Selon l'invention on réalise un frein de stationnement comportant un étrier flottant assurant l'équilibrage des forces,cet équilibrage est obtenu par la solidarisation de l'extémité de l'un des deux câbles avec les moyens assurant la traction sur l'extrémité de l'autre câble.

Dans un frein de type à deux câbles disposés en vis à vis (stretcher en terminologie anglo-saxonne), la force est transmise aux freins par la traction sur les câbles entourés par des gaines. Une des extrémités de chaque gaine prend appui sur ledit frein.

Avantageusement, le frein de parking selon la présente invention comporte deux étriers emboîtés l'un dans l'autre.

L'un desdits étriers est solidarisé avec par exemple le chassis du véhicule.

### BREVE DESCRIPTION DES FIGURES

Les différents objets et caractéristiques de l'invention apparaîtront plus clairement dans la description qui va suivre et dans les figures annexées qui représentent:
- les figures 1a et 1b, un exemple de réalisation d'un système de commande de frein automatique selon l'invention,
- les figures 2a et 2b, deux états de fonctionnement (repos et freinage) du système des figures 2a et 2b et permettant d'expliquer le fonctionnement du système de l'invention.

### DESCRIPTION DETAILLEE

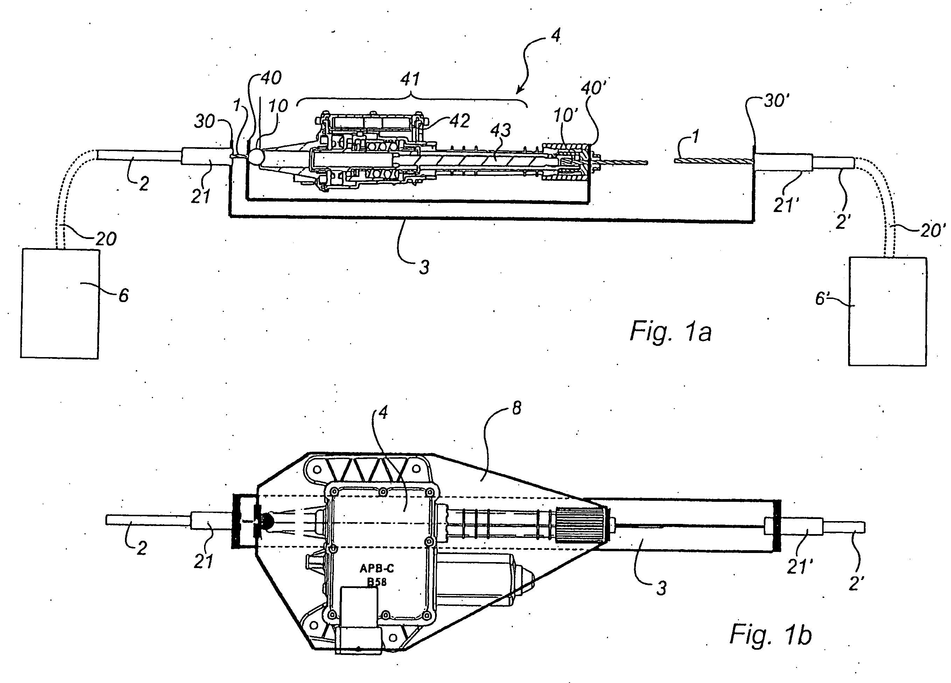

En se reportant aux figures 1a et 1b, on va donc tout d'abord décrire un exemple de réalisation d'un système de frein de parking automatique selon l'invention.

Sur la figure 1a, on a symbolisé, des dispositifs de freinage de roues 6 et 6' destinés à être associé, par exemple, aux roues arrière de gauche et de droite d'un véhicule pour réaliser le freinage de ces roues.

Ces dispositifs de freinage sont commandés par des câbles 1 et 1' situés dans des gaines 2 et 2'. Ces gaines s'appuient, d'une part par leur extrémité 20 et 20' sur les dispositifs de freinage 6 et 6' et, d'autre part, par leur extrémité 21 et 21' sur des pièces d'extrémité 30 et 30' d'un étrier d'appui 3.

Par ailleurs, un dispositif de traction 4 est situé entre les pièces d'extrémité 30 et 30' de l'étrier 3.

Les câbles 1 et 1' traversent les pièces d'extrémité 30 et 30' de l'étrier 3 et ont une extrémité 10 et 10' maintenue dans le dispositif de traction 4.

Le câble 1 a son extrémité 10 fixée au dispositif de traction 4 et est immobilisée sur ce dispositif.

L'extrémité 21 de la gaine 2 peut se déplacer sur le câble 1 lorsqu'elle est poussée par la pièce d'extrémité 30 de l'étrier 3.

L'extrémité 10' du câble 1' est fixée à une pièce mobile 43 du dispositif de traction 4 et peut donc se déplacer comme cela sera expliqué ci-après.

L'extrémité 21' de la gaine 2' peut se déplacer et accompagner un déplacement de la pièce d'extrémité 30' de l'étrier.

Enfin, l'étrier 3 est mobile par rapport au disposé de traction 4.

Le dispositif de traction 4 comporte un actionneur 41 capable de tirer sur l'extrémité 10' du câble 1'. L'actionneur comporte un moteur électrique 42 qui commande, par l'intermédiaire d'un système de transmission (engrenages par exemple) la rotation d'une vis 43. Celle-ci est vissée dans une pièce femelle filetée qui est fixe. La vis 43, en tournant, se déplace donc selon son axe. L'extrémité 10' du câble 1' est fixée à la vis 43. Celle-ci en se déplaçant provoque donc le déplacement de l'extrémité 10'.

Selon une forme de réalisation préférée de l'invention, le dispositif de traction est fixé au véhicule. Sur la figure 1b, on voit que le dispositif de traction 4 est fixé sur une embase 8, laquelle est destinée à être fixée au châssis du véhicule ou à toute pièce solidaire du châssis.

L'étrier est flottant et peut se déplacer par rapport au dispositif de traction.

De préférence, l'étrier est guidé dans son déplacement selon axe joignant les deux pièces d'extrémité 30 et 30'.

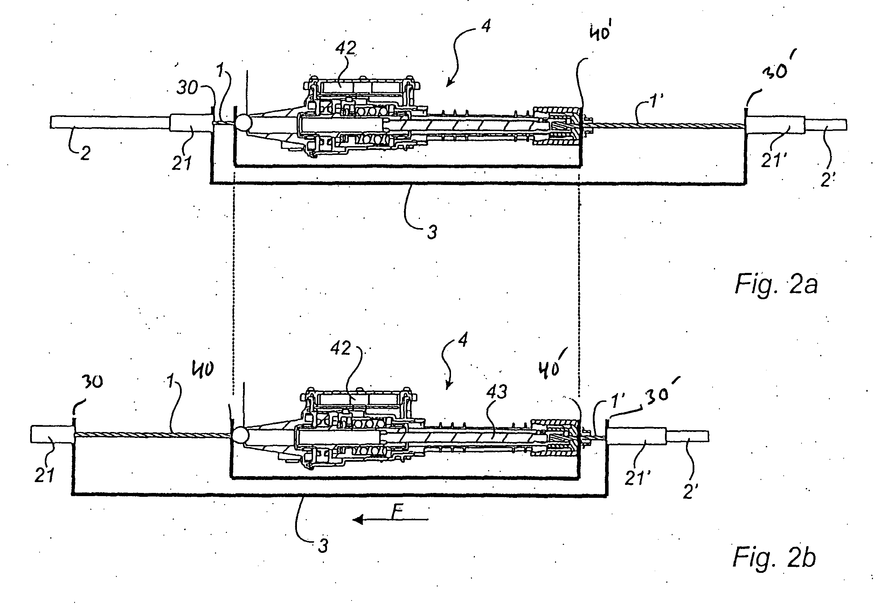

En se reportant aux figures 2a et 2b, on va maintenant décrire le fonctionnement du système de l'invention.

En figure 2a, le système est au repos. Les câbles sont tendus de telle façon qu'il n'exerce aucun effort sur les dispositifs de freinage 6 et 6' (figure 1a). Les extrémités 21 et 21' des gaines 2 et 2' sont en appui sur les pièces d'extrémité 30 et 30' de l'étrier 3.

Lors d'une commande de freinage, le moteur 42 commande le déplacement de la vis 43 selon le sens de la flèche F. La vis 43 tire donc sur le câble 1'.

La gaine 2' est comprimée entre la pièce d'extrémité 30' et le dispositif de freinage 6'. La courbure de la gaine 2' est modifiée. Le câble exerce une traction sur le dispositif de freinage 6'. Le dispositif de freinage 6' va donc commencer à freiner. Simultanément, l'extrémité 21' de la gaine 2' étant en appui sur la pièce d'extrémité 30' de l'étrier 3, la pièce 30' est attirée vers le dispositif de traction 4. L'étrier 3 se déplace donc selon le sens de la flèche F.

Dans ce mouvement, l'étrier 3 repousse à l'aide de sa pièce d'extrémité 30 l'extrémité 21 de la gaine 2. L'extrémité 20 de la gaine est en appui sur le dispositif de freinage 6 et la courbure de la gaine 2 est modifiée. En raison de cette modification de courbure, le câble 1 exerce une traction qui commande le freinage du dispositif 6.

On voit donc que l'étrier 3, en se déplaçant selon le sens de la flèche F, provoque des changements de courbures des gaines 2 et 2'. Ces modifications de courbures provoquent une traction des câbles 1 et 1' sur les dispositifs de freinage 6 et 6'.

Selon une autre forme de réalisation, l'étrier est fixé au châssis du véhicule et le dispositif de traction (4) est mobile entre les pièces d'extrémité 30 et 30' de l'étrier 3. Le fonctionnement de cette variante de réalisation est le même que ce lui décrit précédemment avec comme seule différence que c'est le dispositif de traction qui se déplace entre les pièces d'extrémités 30 et 30' de l'étrier au lieu que ce soit l'étrier qui se déplace.

Avantageusement, l'ensemble "étrier/dispositif de traction" est placé dans une zone située entre les deux dispositifs de freinage des roues arrière du véhicule. Par exemple, l'ensemble "étrier/dispositif de traction" peut être situé sensiblement à proximité d'une ligne joignant ces dispositifs de freinage, mais ils ne sont pas forcément situés à égales distances de ces dispositifs de freinage.

Selon une forme de réalisation préférée de l'invention, cet ensemble est fixé sur le train arrière du véhicule.

## Revendications

1. Frein de stationnement de véhicule automobile comprenant au moins un premier et un deuxième câble (1, 1') destinés à transmettre des efforts de freinage respectivement à un premier et un deuxième dispositif de freinage de roue (6, 6') du véhicule, ces premier et deuxième câbles (1, 1') étant situés respectivement dans une première et une deuxième gaine (2, 2') possédant chacune une première extrémité (20, 20') et une deuxième extrémité (21, 21'), la première extrémité (20, 20') de chaque gaine prenant appui sur un desdits dispositifs de freinage (6, 6'), **caractérisé en ce qu'**il comporte également un étrier d'appui (3) possédant une première et une deuxième pièce d'extrémité d'appui (30, 30'), la deuxième extrémité (21) de la première gaine (2) prenant appui sur la première pièce d'extrémité d'appui (30) et la deuxième extrémité (21') de la deuxième gaine (2') prenant appui sur la deuxième pièce d'extrémité d'appui (30'), un dispositif de traction (4) étant situé entre la première et la deuxième pièce d'extrémité d'appui (30, 30') et permettant d'exercer un effort de traction sur ledit deuxième câble et **en ce que** le premier câble (1) a son extrémité (10) fixée au dispositif de traction (4) et est immobilisée sur ce dispositif.

2. Frein de stationnement de véhicule automobile selon la revendication 1, **caractérisé en ce que** le dispositif de traction (4) est fixé au châssis du véhicule.

3. Frein de stationnement de véhicule automobile selon la revendication 2, **caractérisé en ce que** ledit étrier d'appui (3) est guidé selon un axe joignant les deux pièces d'appui d'extrémité (30, 30').

4. Frein de stationnement de véhicule selon la revendication 4, **caractérisé en ce que** le dispositif de traction (4) possède une pièce de fixation (8) qui est fixée au véhicule et qui possède un dispositif de guidage pour guider le déplacement dudit étrier (3).

5. Frein de stationnement de véhicule automobile selon l'une quelconque des revendications précédentes, **caractérisé en ce que** l'étrier (3) est fixé au châssis du véhicule et **en ce que** le dispositif de traction (4) est mobile entre les deux pièces d'appui d'extrémité (30, 30').

6. Frein de stationnement de véhicule automobile selon la revendication 1, **caractérisé en ce que** le dispositif de traction comporte un moteur électrique permettant de tirer sur ledit deuxième câble (1').

7. Frein de stationnement de véhicule automobile selon l'une quelconque des revendications précédentes, **caractérisé en ce que** l'étrier d'appui (3) et le dispositif de traction (4) sont situés sensiblement entre les deux dispositifs de freinage (6, 6').

8. Frein de stationnement de véhicule selon l'une des revendications précédentes, **caractérisé en ce que** l'étrier d'appui (3) et le dispositif de traction (4) sont situés dans une zone localisée sur la train arrière du véhicule.

## Claims

1. Motor vehicle parking brake comprising at least a first and a second cable (1, 1') which are intended to transmit braking forces respectively to a first and a second wheel braking device (6, 6') of the vehicle, these first and second cables (1, 1') being situated respectively in a first and a second sheath (2, 2') each having a first end (20, 20') and a second end (21, 21'), and the first end (20, 20') of each sheath bearing on one of the said braking devices (6, 6'), **characterized in that** it also comprises a bearing yoke (3) having a first and a second bearing end part (30, 30'), the second end (21) of the first sheath (2) bearing on the first bearing end part (30) and the second end (21') of the second sheath (2') bearing on the second bearing end part (30'), a traction device (4) being situated between the first and the second bearing end part (30, 30') and making it possible to exert a traction force on the said second cable, and **in that** the first cable (1) has its end (10) fixed to the traction device (4) and is immobilized on this device.

2. Motor vehicle parking brake according to Claim 1, **characterized in that** the traction device (4) is fixed to the chassis of the vehicle.

3. Motor vehicle parking brake according to Claim 2, **characterized in that** the said bearing yoke (3) is guided along an axis joining the two end bearing parts (30, 30').

4. Vehicle parking brake according to Claim 4, **characterized in that** the traction device (4) has a fastening part (8) which is fastened to the vehicle and which has a guide device for guiding the movement of the said yoke (3).

5. Motor vehicle parking brake according to any one of the preceding claims, **characterized in that** the yoke (3) is fixed to the chassis of the vehicle, and **in that** the traction device (4) can move between the two end bearing parts (30, 30').

6. Motor vehicle parking brake according to Claim 1, **characterized in that** the traction device comprises an electric motor making it possible to pull on the said second cable (1').

7. Motor vehicle parking brake according to any one of the preceding claims, **characterized in that** the bearing part (3) and the traction device (4) are situated substantially between the two braking devices (6, 6').

8. Vehicle parking brake according to any one of the preceding claims, **characterized in that** the bearing yoke (3) and the traction device (4) are situated in a region located on the rear axle of the vehicle.

## Patentansprüche

1. Kraftfahrzeugfeststellbremse mit mindestens einem ersten und einem zweiten Seil (1, 1'), die dazu vorgesehen sind, Bremskräfte zu einer ersten bzw. zweiten Fahrzeugradbremsvorrichtung (6, 6') zu übertragen, wobei dieses erste und dieses zweite Seil (1, 1') in einer ersten bzw. zweiten Umhüllung (2, 2') angeordnet sind, die jeweils ein erstes Ende (20, 20') und ein zweites Ende (21, 21') aufweisen, wobei das erste Ende (20, 20') jeder Umhüllung an einer der Bremsvorrichtungen (6, 6') anliegt, **dadurch gekennzeichnet, dass** sie auch einen Stützbügel (3) mit einem ersten und einem zweiten Stützendstück (30, 30') aufweist, wobei das zweite Ende (21) der ersten Umhüllung (2) am ersten Stützendstück (30) und das zweite Ende (21') der zweiten Umhüllung (2') am zweiten Stützendstück (30') anliegt, wobei eine Zugvorrichtung (4) zwischen dem ersten und dem zweiten Stützendstück (30, 30') angeordnet ist und das Ausüben einer Zugkraft auf das zweite Seil ermöglicht und wobei das Ende (10) des ersten Seils (1) an der Zugvorrichtung (4) befestigt und an dieser Vorrichtung festgelegt ist.

2. Kraftfahrzeugfeststellbremse nach Anspruch 1, **dadurch gekennzeichnet, dass** die Zugvorrichtung (4) am Fahrgestell des Fahrzeugs befestigt ist.

3. Kraftfahrzeugfeststellbremse nach Anspruch 2, **dadurch gekennzeichnet, dass** der Stützbügel (3) entlang einer Achse geführt ist, die die beiden Stützendstücke (30, 30') verbindet.

4. Kraftfahrzeugfeststellbremse nach Anspruch 4, **dadurch gekennzeichnet, dass** die Zugvorrichtung (4) ein Befestigungsteil (8) aufweist, das am Fahrzeug befestigt ist und eine Vorrichtung zur Führung der Verlagerung des Bügels (3) aufweist.

5. Kraftfahrzeugfeststellbremse nach einem der vorhergehenden Ansprüche, **dadurch gekennzeichnet, dass** der Bügel (3) am Fahrgestell des Fahrzeugs befestigt ist und die Zugvorrichtung (4) zwischen den beiden Stützendstücken (30, 30') beweglich ist.

6. Kraftfahrzeugfeststellbremse nach Anspruch 1, **dadurch gekennzeichnet, dass** die Zugvorrichtung einen Elektromotor aufweist, mit dem es möglich ist, am zweiten Seil (1') zu ziehen.

7. Kraftfahrzeugfeststellbremse nach einem der vorhergehenden Ansprüche, **dadurch gekennzeichnet, dass** der Stützbügel (3) und die Zugvorrichtung (4) im Wesentlichen zwischen den beiden Bremsvorrichtungen (6, 6') angeordnet sind.

8. Kraftfahrzeugfeststellbremse nach einem der vorhergehenden Ansprüche, **dadurch gekennzeichnet, dass** der Stützbügel (3) und die Zugvorrichtung (4) in einem Bereich an der Hinterachse des Fahrzeugs angeordnet sind.
